(19) Europäisches Patentamt
European Patent Office
Office européen des brevets

(11) EP 3 547 469 A1

(12) EUROPEAN PATENT APPLICATION
published in accordance with Art. 153(4) EPC

(43) Date of publication:
02.10.2019 Bulletin 2019/40

(51) Int Cl.:
H01S 3/10 (2006.01)          H01S 3/067 (2006.01)
H04B 10/294 (2013.01)

(21) Application number: 17873328.3

(22) Date of filing: 20.11.2017

(86) International application number:
PCT/JP2017/041586

(87) International publication number:
WO 2018/097074 (31.05.2018 Gazette 2018/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.11.2016 JP 2016229936

(71) Applicant: NEC Corporation
Tokyo 108-8001 (JP)

(72) Inventor: KAWAI, Motoyoshi
Tokyo 108-8001 (JP)

(74) Representative: Reeve, Nicholas Edward
Reddie & Grose LLP
The White Chapel Building
10 Whitechapel High Street
London E1 8QS (GB)

(54) OPTICAL COMMUNICATION DEVICE, AND DEVICE SUPPLYING EXCITATION LIGHT FOR OPTICAL AMPLIFICATION

(57) An optical communication device includes equal branching optical system (301), to which a first excitation light beam (PI) and a second excitation light beam (P2) are input, generates a plurality of equally branched light beams (P12), an unequal branching optical system (401), to which a third excitation light beam (Padd) is input, generates a plurality of unequally branched light beams (Pm, Pn), the equally branched light beams (P12) and the first unequally branched light beam (Pm) are input to a first equal branching coupler (302), which outputs output branched light beams (P12m) as excitation light for optical fiber amplifiers (100, 200) for a first wavelength band, the equally branched light beams (P12) and the second unequally branched light beam (Pn) are input to a second equal branching coupler (303), which outputs output branched light beams (P12n) as excitation light for optical fiber amplifiers (101, 201) for a second wavelength band.

FIG. 1          FIRST EXAMPLE EMBODIMENT

EP 3 547 469 A1

**Description**

[Technical Field]

The present invention relates to an optical communication device using an optical amplifier that amplifies an optical signal by using excitation light, and, in particular, to a device that supplies the excitation light.

[Background Art]

In a wavelength division multiplexing (WDM) system employed in a communication network laid on a sea bottom, an increase in capacity using a plurality of wavelength bands is being studied. A system applied with, for example, a C+L-band in which not only a C-band wavelength band (1530 to 1565 nm) but also an L-band (1565 to 1625 nm) as a long wavelength band are added. As an optical amplifier of such a broadband, in general, an optical amplification medium (hereinafter, referred to as an "optical fiber amplifier") added with a rare-earth element such as erbium is used. Further, as a configuration of an optical amplifier, a parallel circuit that demultiplexes a WDM input signal into a plurality of sub-bands, amplifies optical signals of the sub-bands by using optical fiber amplifiers, respectively, and thereby multiplexes the amplified optical signals has been proposed (see PTLs 1 and 2).

The optical fiber amplifier described above amplifies an optical signal by using excitation light, but it is known that gain characteristics thereof change depending on a wavelength of the optical signal and a power of the excitation light. An optical fiber amplifier used, for example, in an L-band has low excitation light efficiency of gain characteristics, compared with a case of use in a C-band. Therefore, in order for gain characteristics to be uniform regardless of a wavelength band, a method for controlling a power of excitation light with respect to each wavelength band has been proposed. In an optical amplifier disclosed in, for example, PTL 2, a distribution coupler is disposed in an excitation light source, and excitation light having appropriate intensity is supplied to an optical fiber amplifier used for each wavelength band.

Further, in order that an optical fiber amplifier operates, it is necessary to continuously supply excitation light at a certain power or more. In particular, in a submarine repeater applied to a large-capacity submarine communication system, it is difficult to perform a repair such as component replacement, and therefore it is very important to use an optical amplifier having high reliability. Therefore, a redundant configuration for increasing reliability by using a plurality of excitation light sources is employed. In a redundant configuration disclosed in, for example, PTL 3, three excitation light sources and a 3×2 coupler are disposed, and excitation light is distributed in such a way as to be able to supply even when any one of the excitation light sources fails. Specifically, first and second excitation lights are output as upstream use and downstream use, respectively, through a 3×2 coupler, and a third excitation light is divided into halves which are output as both upstream use and downstream use.

Further, PTLs 4 and 5 describe a technique of an optical amplifier related to the present invention.

[Citation List]

[Patent Literature]

[PTL 1] U.S. Patent No. 6049417 description
[PTL 2] Japanese Unexamined Patent Application Publication No. 2006-012979
[PTL 3] Japanese Unexamined Patent Application Publication No. H8-304860
[PTL 4] Japanese Unexamined Patent Application Publication No. 2014-072280
[PTL 5] Japanese Unexamined Patent Application Publication No. 2002-319726

[Summary of Invention]

[Technical Problem]

When an optical amplifier having the parallel configuration described above is applied to an optical communication device that needs high reliability as in a submarine repeater, it is necessary to supply excitation light for which wavelength dependency is taken into consideration, with high reliability, to optical fiber amplifiers of a plurality of wavelength bands, respectively. Further, upstream and downstream optical amplifiers are necessary as a repeater, and therefore it is necessary to equally supply excitation light for which wavelength dependency is taken into consideration with high reliability in a similar manner to the optical amplifiers of both upstream and downstream directions.

However, in the redundant configuration disclosed in PTL 3 described above, substantially, a third excitation light is merely supplied equally to upstream and downstream optical amplifiers by using a 3×2 coupler, and an optical circuit configuration in which excitation light for which wavelength dependency is taken into consideration is stably supplied to an optical amplifier having a parallel configuration is not disclosed.

Therefore, an object of the present invention is to provide a device that supplies highly reliable excitation light for which wavelength dependency is taken into consideration to each of optical fiber amplifiers associated with a plurality of wavelength bands, respectively, and an optical communication device using the device.

[Solution to Problem]

An optical communication device according to the present invention includes: a plurality of optical fiber amplifiers associated with a plurality of wavelength bands, respectively; three or more excitation light sources that each output excitation light; an equal branching optical system having an equal branching ratio; first and second equal branching couplers having an equal branching ratio of two inputs/two outputs; and an unequal branching optical system having a predetermined unequal branching ratio, wherein the equal branching optical system inputs a first excitation light and a second excitation light and generates a plurality of equally branched lights, the unequal branching optical system inputs at least one third excitation light and generates a plurality of unequally branched lights, the first equal branching coupler inputs one equally branched light and a first unequally branched light and outputs output branched light thereof as excitation light of an optical fiber amplifier used for a first wavelength band, and the second equal branching coupler inputs one equally branched light and a second unequally branched light and outputs output branched light thereof as excitation light of an optical fiber amplifier used for a second wavelength band.

An excitation light supply device according to the present invention is a device that supplies excitation light to each of optical fiber amplifiers associated with a plurality of wavelength bands, respectively, the device including: three or more excitation light sources that each output excitation light; an equal branching optical system having an equal branching ratio; first and second equal branching couplers having an equal branching ratio of two inputs/two outputs; and an unequal branching optical system having a predetermined unequal branching ratio, wherein the equal branching optical system inputs a first excitation light and a second excitation light and generates a plurality of equally branched lights, the unequal branching optical system inputs at least one third excitation light and generates a plurality of unequally branched lights, the first equal branching coupler inputs one equally branched light and a first unequally branched light and outputs output branched light thereof as excitation light of an optical fiber amplifier used for a first wavelength band, and the second equal branching coupler inputs one equally branched light and a second unequally branched light and outputs output branched light thereof as excitation light of an optical fiber amplifier used for a second wavelength band.

[Advantageous Effects of Invention]

According to the present invention, highly reliable excitation light for which wavelength dependency is taken into consideration can be supplied to each of optical fiber amplifiers associated with a plurality of wavelength bands, respectively.

[Brief Description of Drawings]

FIG. 1 is a configuration diagram illustrating an excitation light supply system in an optical communication device according to a first example embodiment of the present invention.
FIG. 2 is a configuration diagram illustrating an excitation light supply system in an optical communication device according to a second example embodiment of the present invention.
FIG. 3 is a configuration diagram illustrating an excitation light supply system in an optical communication device according to a third example embodiment of the present invention.

[Example Embodiment]

<Summary of Example Embodiment>

According to an example embodiment of the present invention, three or more excitation light sources, an equal branching optical system having an equal branching ratio, first and second equal branching couplers having an equal branching ratio of two inputs/two outputs, and an unequal branching optical system having an unequal branching ratio are included, wherein the equal branching optical system generates a plurality of unequally branched lights from a first excitation light and a second excitation light, the unequal branching optical system generates a plurality of unequally branched lights from at least one third excitation light, and the first equal branching coupler and the second equal branching coupler generate excitation light of an optical fiber amplifier used for a first wavelength band from an equally branched light and a first unequally branched light, and excitation light of an optical fiber amplifier used for a second wavelength band from an equally branched light and a second unequally branched light, respectively. Thereby, two excitation lights having an intensity ratio reflected with an unequal branching ratio can be output to optical fiber amplifiers used for different wavelength bands. In this manner, highly reliable excitation light for which wavelength dependency of gain characteristics has been taken into consideration can be supplied to each of optical fiber amplifiers associated with a plurality of wavelength bands, respectively.

Hereinafter, in order not to complicate description, an optical amplifier that amplifies, in parallel, optical signals of two wavelength bands of a C-band (1530 to 1565 nm) and an L-band (1565 to 1625 nm), respectively, is given as an example, and a distribution system of excitation light supplied to each of an optical fiber amplifier for C-band use and an optical fiber amplifier for L-band use is described. However, the present invention is not limited to this example, and even an optical amplifier of an optical communication system in which three or more bands are included in a wavelength band is also applicable. Further, while an optical fiber amplifier that executes optical amplification by using excitation light can use an optical amplification medium added with a rare-earth element, in the following example embodiments, it is assumed that an erbium-doped fiber (EDF) amplifier is used as an example.

1. First Example Embodiment

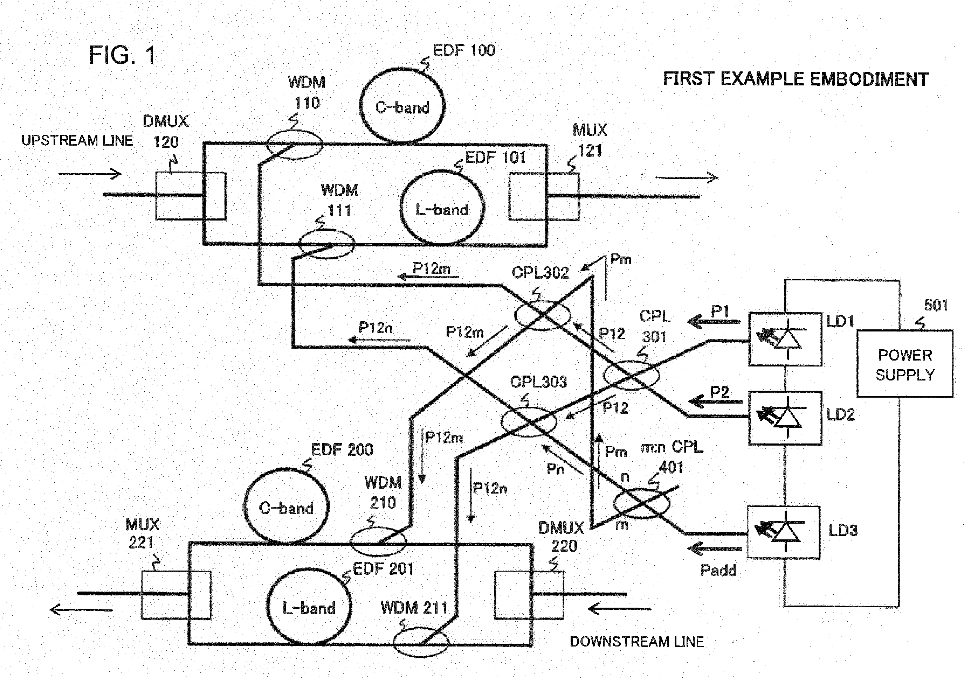

As illustrated in FIG. 1, an optical communication device according to a first example embodiment of the present invention includes two optical amplifiers for upstream use and downstream use and an excitation light supply device that supplies excitation light to each of these optical amplifiers, and the excitation light supply device includes a plurality of excitation light sources that each emit excitation light and an excitation light supply optical system that generates excitation light supplied to each of the upstream and downstream optical amplifiers and the excitation light supply optical system sets an excitation light power in such a way that an output power of an EDF amplifier of the optical amplifier is uniform.

(1.1) Optical Amplifier

An upstream amplifier includes an EDF amplifier 100 and a WDM coupler 110 for C-band use, an EDF amplifier 101 and a WDM coupler 111 for L-band use, a demultiplexing coupler 120 that inputs an upstream WDM optical signal and demultiplexes the input signal into a C-band optical signal and an L-band optical signal, and a multiplexing coupler 121 that multiplexes the C-band optical signal and the L-band optical signal amplified by the EDF amplifiers 100 and 101, respectively, and outputs an upstream WDM optical signal. The WDM coupler 110 multiplexes excitation light from an excitation light supply optical system to be described later with a C-band optical signal, and thereby the EDF amplifier 100 for C-band use amplifies the C-band optical signal. Similarly, the WDM coupler 111 multiplexes excitation light from an excitation light supply optical system to be described later with an L-band optical signal, and thereby the EDF amplifier 101 for L-band use amplifies the L-band optical signal. As already described, the EDF amplifier 100 for C-band use and the EDF amplifier 101 for L-band use have wavelength dependency on gain characteristics. Therefore, in order to offset non-uniformity of output due to wavelength dependency of gain characteristics, intensities of two excitation lights supplied to these EDF amplifiers are previously adjusted by an unequal branching optical system.

The downstream optical amplifier also includes a configuration similar to the configuration of the upstream optical amplifier. In other words, an EDF amplifier 200 and a WDM coupler 210 for C-band use, an EDF amplifier 201 and a WDM coupler 211 for L-band use, a demultiplexing coupler 220 that inputs a downstream WDM optical signal and demultiplexes the input signal into a C-band optical signal and an L-band optical signal, and a multiplexing coupler 221 that multiplexes the C-band optical signal and the L-band optical signal amplified by the EDF amplifiers 200 and 201, respectively, and outputs a downstream WDM optical signal are included. Further, in order to eliminate non-uniformity of output due to wavelength dependency of a gain of an EDF amplifier, intensities of excitation light multiplexed by the WDM coupler 210 and excitation light multiplexed by the WDM coupler 211 are previously adjusted by an unequal branching optical system.

(1.2) Excitation Light Supply Device

An excitation light supply optical system includes an equal branching optical system including equal branching couplers 301 to 303 of an equal branching ratio (1:1) of two inputs/two outputs and an unequal branching optical system including an unequal branching coupler 401 of an unequal branching ratio (m:n). Here, m and n each are a natural number and are previously set in such a way as to eliminate non-uniformity of output due to the wavelength dependency of an EDF amplifier described above. Two outputs of the equal branching coupler 301 are optically connected to each of one input of the equal branching coupler 302 and one input of the equal branching coupler 303. An output of an m side of the unequal branching coupler 401 is optically connected to the other input of the equal branching coupler 302, and an output of an n side of the unequal branching coupler 401 is optically connected to the other input of the equal branching coupler 303.

The two outputs of the equal branching coupler 302 supply excitation light of a C-band side and are optically connected to the upstream C-band side WDM coupler 110 and the downstream C-band side WDM coupler 210, respectively. Similarly, the two outputs of the equal branching coupler 303 supply excitation light of an L-band side and are optically connected to the upstream L-band side WDM coupler 111 and the downstream L-band side WDM coupler 211, respectively.

Excitation light sources LD1 to LD3 are laser diodes and output excitation lights PI, P2, and Padd, respectively, by using a power supply 501. The excitation light sources LD1 and LD2 are optically connected to two inputs of the equal branching coupler 301, respectively, and the excitation light source LD3 is optically connected to an input of the unequal branching coupler 401. Any wavelength of excitation light in the present example embodiment is 980 nm. The excitation lights PI, P2, and Padd of the excitation light sources LD1 to LD3 may have the same power or may have powers different from one another, however, each having substantially a constant power. The power supply 501 in the present example embodiment may include a backup power supply.

(1.3) Operation

When the power supply 501 is turned on, excitation lights PI, P2, and Padd are output from the excitation light sources LD1 to LD3, respectively. The excitation lights P1 and P2 are input to the equal branching coupler 301, are multiplexed, and are generated as two branched lights P12 by being branched into two parts at an equal branching ratio, and then one branched light P12 is output to one input of the equal branching coupler 302 and the other branched light P12 is output to one input of the equal branching coupler 303. The excitation light Padd is input to the unequal branching coupler 401 and branched into two branched lights Pm and Pn at a distribution ratio of m:n, and then the branched light Pm is output to the other input of the equal branching coupler 302 and the branched light Pn is output to the other input of the equal branching coupler 303.

The branched light P12 and the branched light Pm are input to the equal branching coupler 302 and are multiplexed, two branched lights P12m are generated by being branched into two parts at an equal branching ratio, and these generated lights are input to the WDMs 110 and 210 of a C-band side, respectively, and are used as excitation light for the EDF amplifiers 100 and 200 for upstream and downstream C-band use. Further, the branched light P12 and the branched light Pn are input to the equal branching coupler 303 and are multiplexed, two branched lights P12n are generated by being branched into two parts at an equal branching ratio, and these generates lights are input to the WDMs 111 and 211 of an L-band side, respectively, and are used as excitation light for the EDF amplifiers 101 and 201 for upstream and downstream L-band use.

In an excitation light supply optical system illustrated in FIG. 1, excitation lights (powers) PI, P2, and Padd output from the excitation light sources LD1 to LD3 are distributed as follows. However,in order not to complicate calculation, it is assumed that the equal branching couplers 310 to 303 and the unequal branching coupler 401 do not have no additive loss during production and have ideal characteristics.

A distribution ratio of the equal branching coupler 301 that inputs excitation lights P1 and P2 is 1:1, and therefore powers of two outputs P12 thereof are P12=(P1+P2)/2.

A distribution ratio of the unequal branching coupler 401 that inputs an excitation light Padd is m:n, and therefore powers of two outputs Pm and Pn thereof are Pm=m*Padd/(m+n) and Pn=n*Padd/(m+n), respectively.

Therefore, powers of two outputs P12m of the equal branching coupler 302 that inputs P12 and Pm are P12m=(P12+Pm)/2 and powers of two outputs P12n of the equal branching coupler 303 that inputs P12 and Pn are P12n=(P12+Pn)/2, and therefore the following equations are established.

An excitation light power P12m distributed to the EDF amplifiers 100 and 200 for C-band use is

$$P12m = \{(P1+P2)/2 + m*Padd/(m+n)\}/2$$

$$= (P1+P2)/4 + m*Padd/2(m+n)$$

and

an excitation light power P12n distributed to the EDF amplifiers 101 and 201 for L-band use is

$$P12n=\{(P1+P2)/2+n*Padd/(m+n)\}/2$$

$$=(P1+P2)/4+n*Padd/2(m+n).$$

By using the equation of P12m and P12n, a distribution ratio m:n of the unequal branching coupler 401 is appropriately set, and thereby a difference between output powers due to wavelength dependency of C-band and L-band EDF amplifiers can be eliminated.

(1.4) Examples

Hereinafter, it is assumed that the equal branching couplers 301 to 303 each are a 3-dB coupler of a branching ratio of 1:1 and the unequal branching coupler 401 is a 10-dB coupler of a branching ratio m:n=1:9. When the excitation light sources LD1 to LD3 have the same power P1=P2=Padd=P, a distribution example of excitation powers P12m and P12n supplied to C-band and L-band EDF amplifiers is described.

A power of an output P12 of the equal branching coupler 301 is (P1+P2)/2, and therefore P12=P is satisfied. Further, in m=1 and n=9 of the unequal branching coupler 401, an output Pm=m*Padd/(m+n) and an output Pn=n*Padd/(m+n), and therefore Pm=1*P/10=0.1P and Pn=9*P/10=0.9P are satisfied. Therefore, an excitation light power supplied from the equal branching coupler 302 to the EDF amplifiers 100 and 210 for a C-band is P12m=(P12+Pm)/2=1.1*P/2=0.55P. In contrast, an excitation light power supplied from the equal branching coupler 303 to the EDF amplifiers 101 and 211 for an L-band is P12n=(P12+Pn)/2=1.9*P/2=0.95P. In other words, when a branching ratio m:n=1:9 is set, excitation light is distributed to an EDF amplifier of an L-band side approximately 1.7 times, compared with a C-band side.

As another example, when the unequal branching coupler 401 has a branching ratio m:n=3:7, excitation powers supplied to EDF amplifiers for a C-band and an L-band are P12m=13*P/20=0.65P and P12n=17*P/20=0.85P. In other words, when a branching ratio m:n=3:7 is set, excitation light is distributed to an EDF amplifier of an L-band side approximately 1.3 times, compared with a C-band side.

(1.5) Advantageous Effects

As described above, according to the first example embodiment of the present invention, when a branching ratio m:n of the unequal branching coupler 401 is set as an appropriate value that satisfies a condition of n>m, more excitation light can be distributed to an L-band side EDF amplifier. Thereby, a gain/output of an EDF amplifier of an L-band having low efficiency can be increased and thereby can be matched with an output of an EDF amplifier of a C-band. Further, a gain of an EDF amplifier of an L-band is increased over the whole L-band area, and therefore optical amplification of the same gain is executed in the whole wavelength band of a C-band and an L-band, whereby highly reliable large-capacity transmission can be achieved.

Further, according to the present example embodiment, a configuration in which the excitation light source LD3 and the unequal branching coupler 401 are merely added to a 4-equal branching optical system using the equal branching couplers 301 to 303 is made, and therefore a structure is simple and production is easy, resulting in excellence in stability as an optical system.

Further, excitation lights of two types, for C-band and L-band, are generated from three excitation lights by a redundant optical system by using three excitation light sources, and therefore even when one excitation light source is deteriorated, upstream and downstream optical amplifiers are operable and thereby a situation of communication line disconnection can be avoided.

2. Second Example Embodiment

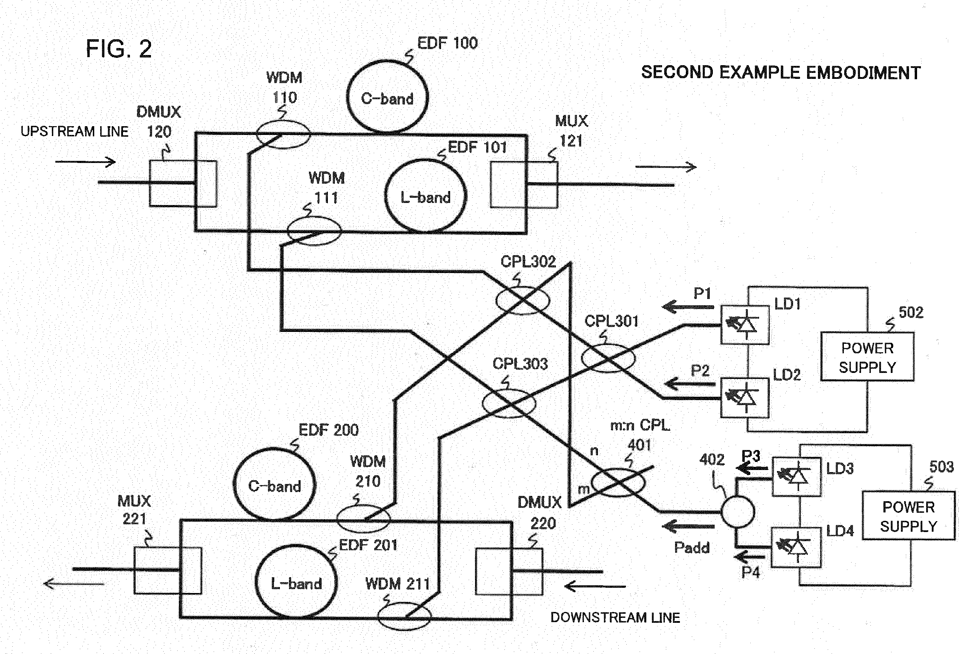

As illustrated in FIG. 2, an optical communication device according to a second example embodiment of the present invention is different from the first example embodiment in a point that four excitation light sources including a laser diode and two power supplies are included, excitation light sources LD1 and LD2 and excitation light sources LD3 and LD4 are driven by separate power supplies, respectively, and excitation lights from the excitation light sources LD3 and LD4 are polarization-multiplexed and an excitation light Padd is generated. Upstream and downstream optical amplifiers and an excitation light supply optical system are similar to the configuration illustrated in FIG. 1, and therefore the same reference number is assigned and description is omitted, and a difference from the first example embodiment is mainly described.

In FIG. 2, excitation light sources LD1 and LD2 are connected to a power supply 502 and outputs, similarly to the first example embodiment, excitation lights P1 and P2 to two inputs of an equal branching coupler 301, respectively.

Excitation light sources LD3 and LD4 are connected to separate power supplies 503 and output excitation lights P3 and P4 to two inputs of a polarization multiplexing coupler 402 through a polarization maintaining fiber, respectively. In general, as a fiber for connection to an excitation light source of a wavelength band of 980 nm, a polarization maintaining fiber is used. An excitation light P3+P4 synthesized by the polarization multiplexing coupler 402 is output to an unequal branching coupler 401 as the excitation light Padd in the first example embodiment.

Excitation lights P3 and P4 from two excitation light sources LD3 and LD4 are multiplexed by the polarization multiplexing coupler 402, and thereby more excitation light can be allocated to unequal distribution between an EDF amplifier of a C-band side and an EDF amplifier of an L-band side. Further, as described in the first example embodiment, when branching distribution of the unequal branching coupler 401 is set as m<n, an output and a gain of an EDF amplifier of an L-band side can be increased, compared with a C-band side.

Excitation light for four EDF amplifiers is redundantly generated by four excitation light sources LD1 to LD4, and therefore an output of each excitation light source can be reduced, compared with the first example embodiment and stability and reliability of an excitation light source itself can be enhanced.

Further, even when a branching ratio m:n of the unequal branching coupler 401 is previously fixed, added excitation light sources LD3 and LD4 are operated with current of a separate power supply 503, whereby distribution adjustment of excitation light for EDF amplifiers of a C-band and an L-band is made possible by controlling drive current of the power supply 503.

3. Third Example Embodiment

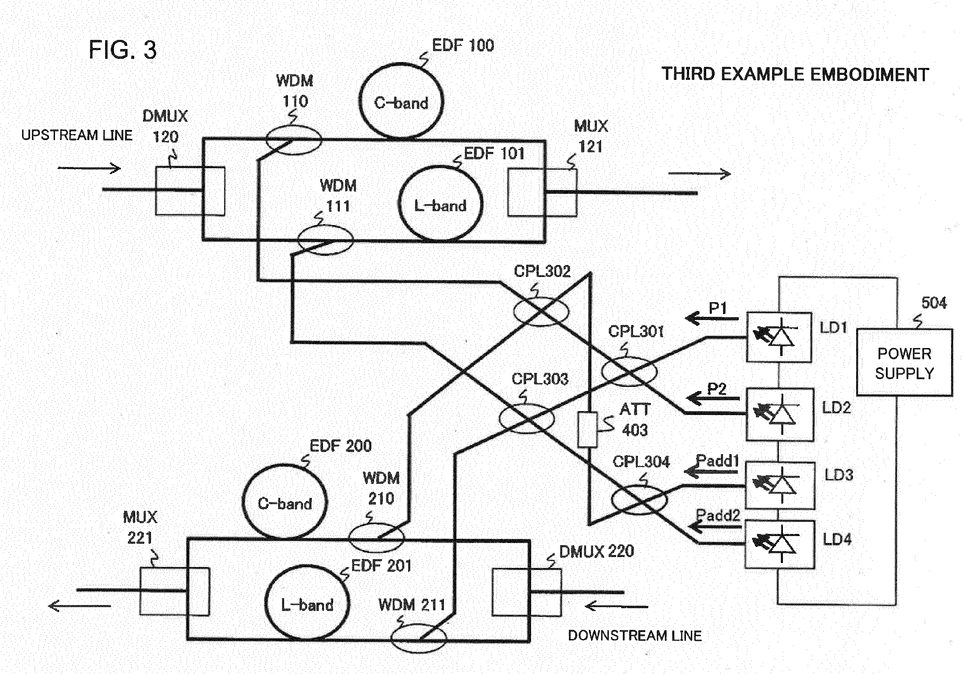

As illustrated in FIG. 3, an optical communication device according to a third example embodiment of the present invention is different in a point that instead of the unequal branching coupler 401 and the excitation light source LD3 in the first example embodiment (FIG. 1), two excitation light sources LD3 and LD4 and an unequal branching optical system including an equal branching coupler 304 and an optical attenuator 403 are used. Alternatively, the optical communication device according to the third example embodiment of the present invention is different in a point that instead of an unequal branching optical system including the unequal branching coupler 401 and the polarization multiplexing coupler 402 in the second example embodiment (FIG. 2), an unequal branching optical system including an equal branching coupler 304 and an optical attenuator 403 is used. In other words, in the third example embodiment, instead of a branching ratio m:n of the unequal branching coupler 401 of the first and the second example embodiment, by using the optical attenuator 403, excitation light of a C-band side is attenuated, compared with an L-band side, and thereby a function similar to the unequal branching coupler 401 is achieved. Other configurations and functions are similar to corresponding configurations and functions of the first and the second example embodiment, and therefore the same reference number is assigned and description is omitted and a difference from the first example embodiment is mainly described.

In FIG. 3, excitation light sources LD1 to LD4 are driven by a power source 504. While the excitation light sources LD1 and LD2 are similar in the first example embodiment (FIG. 1), the excitation light sources LD3 and LD4 that respectively output excitation lights Padd1 and Padd2 are optically connected to two inputs of the equal branching coupler 304, respectively. One output of the equal branching coupler 304 is connected to one input of an equal branching coupler 302 via the optical attenuator 403, and the other output thereof is connected to one input of the equal branching coupler 303.

Excitation lights Padd1 and Padd2 are input to the equal branching coupler 304, each of the lights is generated as two branched lights by being branched into two parts, one branched light is attenuated by the optical attenuator 403 and output to the equal branching coupler 302, and the other branched light is output to the equal branching coupler 303. Therefore, an optical system including the equal branching coupler 304 and the optical attenuator 403 adjusts an attenuation amount of the optical attenuator 403 and thereby can achieve a function equivalent to the unequal branching coupler 401 in the first example embodiment.

As described above, according to the present example embodiment, an attenuation amount of the optical attenuator 403 is set as an appropriate value, and thereby excitation light for an EDF amplifier of a C-band side can be attenuated and relatively more excitation light can be distributed to an EDF amplifier of an L-band side. Thereby, a gain/output of an EDF amplifier of an L-band having low efficiency can be increased and, similar to the first example embodiment, can be matched with an output of an EDF amplifier of a C-band.

Further, when the optical attenuator 403 is used, an excitation light supply optical system can be configured by using the equal branching couplers 301 to 304 as a whole, and when an attenuation amount of the optical attenuator 403 is adjusted, an excitation light distribution ratio is easily set.

4. Supplementary Notes

The whole or part of the example embodiments disclosed above can be described as, but not limited to, the following supplementary notes.

(Supplementary note 1)

An optical communication device including:

a plurality of optical fiber amplifiers associated with a plurality of wavelength bands, respectively;
three or more excitation light sources that each output excitation light;
an equal branching optical system having an equal branching ratio;
first and second equal branching couplers having an equal branching ratio of two inputs/two outputs; and
an unequal branching optical system having a predetermined unequal branching ratio, wherein
the equal branching optical system inputs a first excitation light and a second excitation light and generates a plurality of equally branched lights and the unequal branching optical system inputs at least one third excitation light and generates a plurality of unequally branched lights,
the first equal branching coupler inputs one equally branched light and a first unequally branched light and outputs output branched light of the coupler as excitation light of an optical fiber amplifier used for a first wavelength band, and
the second equal branching coupler inputs one equally branched light and a second unequally branched light and outputs output branched light of the coupler as excitation light of an optical fiber amplifier used for a second wavelength band.

(Supplementary note 2)

The optical communication device according to supplementary note 1, wherein
the first equal branching coupler outputs one output branched light of the coupler as excitation light used in an optical fiber amplifier used for the first wavelength band of a first direction communication and the other output branched light of the coupler as excitation light of an optical fiber amplifier used for the first wavelength band of a second direction communication, and
the second equal branching coupler outputs one output branched light of the coupler as excitation light used in an optical fiber amplifier used for the second wavelength band of the first direction communication and the other output branched light of the coupler as excitation light of an optical fiber amplifier used for the second wavelength band of the second direction communication.

(Supplementary note 3)

The optical communication device according to supplementary note 1 or 2, including:

four excitation light sources and two power supplies, wherein first and second excitation light sources are driven by a first power supply and third and fourth excitation light sources are driven by a second power supply; and
a polarization multiplexing coupler that synthesizes two third excitation lights in a polarized manner from the third and fourth excitation light sources and inputs the synthesized light to the unequal branching optical system.

(Supplementary note 4)

The optical communication device according to any one of supplementary notes 1 to 3, wherein the unequal branching optical system includes an unequal branching coupler.

(Supplementary note 5)

The optical communication device according to any one of supplementary notes 1 to 3, wherein the unequal branching optical system includes one equal branching coupler and one optical attenuator.

(Supplementary note 6)

The optical communication device according to any one of supplementary notes 1 to 5, including
at least one optical amplification unit including a plurality of optical fiber amplifiers associated with the plurality of wavelength bands, respectively,
the optical amplification unit including

a demultiplexing coupler that separates an input optical signal into optical signals of the plurality of wavelength bands, a wavelength separation multiplexing coupler that multiplexes excitation light for an optical fiber amplifier corresponding to each of the plurality of wavelength bands with the optical signal, and a multiplexing coupler that multiplexes a plurality of optical signals amplified by the plurality of optical fiber amplifiers, respectively, and generates an output optical signal.

(Supplementary note 7)

The optical communication device according to any one of supplementary notes 1 to 6, wherein the plurality of wavelength bands are a C-band and an L-band.

(Supplementary note 8)

An optical repeater including the optical communication device according to any one of supplementary notes 1 to 7.

(Supplementary note 9)

An excitation light supply device that supplies respective excitation lights to optical fiber amplifiers associated with a plurality of wavelength bands, respectively, the device including:

three or more excitation light sources that each output excitation light;
an equal branching optical system having an equal branching ratio;
first and second equal branching couplers having an equal branching ratio of two inputs/two outputs; and
an unequal branching optical system having a predetermined unequal branching ratio, wherein
the equal branching optical system inputs a first excitation light and a second excitation light and generates a plurality of equally branched lights and the unequal branching optical system inputs at least one third excitation light and generates a plurality of unequally branched lights,
the first equal branching coupler inputs one equally branched light and a first unequally branched light and outputs output branched light of the coupler as excitation light of an optical fiber amplifier used for a first wavelength band, and
the second equal branching coupler inputs one equally branched light and a second unequally branched light and outputs output branched light of the coupler as excitation light of an optical fiber amplifier used for a second wavelength band.

(Supplementary note 10)

The excitation light supply device according to supplementary note 9, wherein
the equal branching optical system includes a top equal branching coupler having an equal branching ratio of two inputs/two outputs, the first equal branching coupler, and the second equal branching coupler,
the top equal branching coupler inputs the first excitation light and the second excitation light and outputs a first branched light and a second branched light,
the unequal branching optical system inputs the at least one third excitation light and outputs a third branched light and a fourth branched light,
the first equal branching coupler inputs the first branched light and the third branched light and outputs excitation light of an optical fiber amplifier used for the first wavelength band, and
the second equal branching coupler inputs the second branched light and the fourth branched light and outputs excitation light of an optical fiber amplifier used for the second wavelength band.

(Supplementary note 11)

The excitation light supply device according to supplementary note 9 or 10, wherein
the first equal branching coupler outputs one output branched light of the coupler as excitation light used in an optical fiber amplifier used for the first wavelength band of a first direction communication and the other output branched light of the coupler as excitation light of an optical fiber amplifier used for the first wavelength band of a second direction communication, and
the second equal branching coupler outputs one output branched light of the coupler as excitation light used in an optical fiber amplifier used for the second wavelength band of the first direction communication and the other output branched light of the coupler as excitation light of an optical fiber amplifier used for the second wavelength band of the second direction communication.

(Supplementary note 12)

The excitation light supply device according to any one of supplementary notes 9 to 11, including:

four excitation light sources and two power supplies, wherein first and second excitation light sources are driven by a first power supply and third and fourth excitation light sources are driven by a second power supply; and
a polarization multiplexing coupler that synthesizes two third excitation lights in a polarized manner from the third and fourth excitation light sources and inputs the synthesized light to the unequal branching optical system.

(Supplementary note 13)

The excitation light supply device according to any one of supplementary notes 9 to 12, wherein the unequal branching optical system includes an unequal branching coupler.

(Supplementary note 14)

The excitation light supply device according to any one of supplementary notes 9 to 12, wherein the unequal branching optical system includes one equal branching coupler and one optical attenuator.

(Supplementary note 15)

An excitation light supply method including:

outputting a first excitation light to a third excitation light;
a first equal branching coupler coupling means and a second equal branching coupler coupling means having an equal branching ratio of two inputs/two outputs;
coupling the first excitation light and the second excitation light, branching the coupled light at an equal branching ratio, and generating a plurality of equally branched lights;
branching the third excitation light at a predetermined unequal branching ratio and generating a plurality of unequally branched lights;
coupling one of the plurality of equally branched lights and one of the plurality of unequally branched lights, branching the coupled light at an equal branching ratio, and outputting the branched light as excitation light of an optical fiber amplifier used for a first wavelength band; and
coupling the other one of the plurality of equally branched lights and the other one of the plurality of unequally branched lights, branching the coupled light at an equal branching ratio, and outputting the branched light as excitation light of an optical fiber amplification means used for a second wavelength band.

While the invention has been particularly shown and described with reference to example embodiments thereof, the invention is not limited to these example embodiments. It will be understood by those of ordinary skill in the art that various changes in form and details may be made therein without departing from the scope of the present invention.
This application is based upon and claims the benefit of priority from Japanese patent application No. 2016-229936, filed on November 28, 2016, the disclosure of which is incorporated herein in its entirety by reference.

[Industrial Applicability]

The present invention is applicable to an optical communication device including a plurality of optical amplifiers, e.g. a submarine repeater applied to a large-capacity submarine communication system.

[Reference signs List]

| | |
|---|---|
| 100, 200 | EDF amplifier for C-band use |
| 101, 201 | EDF amplifier for L-band use |
| 110, 210 | WDM couple for C-band side |
| 111, 211 | WDM coupler for L-band side |

| 120, 220 | Demultiplexing coupler |
| 121, 221 | Multiplexing coupler |
| 301-303, 304 | Equal branching coupler |
| 401 | Unequal branching coupler |
| 402 | Polarization multiplexing coupler |
| 403 | Optical attenuator |
| 501-503 | Power supply |
| LD1-LD4 | Excitation light source |

**Claims**

1. An optical communication device comprising:

   a plurality of optical fiber amplification means associated with a plurality of wavelength bands, respectively;
   three or more excitation means each for outputting excitation light;
   equal branching means having an equal branching ratio;
   first and second equal branching coupling means having an equal branching ratio of two inputs/two outputs; and
   unequal branching means having a predetermined unequal branching ratio, wherein
   the equal branching means inputs a first excitation light and a second excitation light and generates a plurality of equally branched lights, and the unequal branching means inputs at least one third excitation light and generates a plurality of unequally branched lights,
   the first equal branching coupling means inputs one of the equally branched lights and a first unequally branched light, and outputs output branched light of the first equal branching coupler coupling means as excitation light of optical fiber amplification means used for a first wavelength band, and
   the second equal branching coupling means inputs one of the equally branched lights and a second unequally branched light, and outputs output branched light of the second equal branching coupler coupling means as excitation light of optical fiber amplification means used for a second wavelength band.

2. The optical communication device according to claim 1, wherein
   the first equal branching coupling means outputs one output branched light as excitation light used in optical fiber amplification means used for the first wavelength band of a first direction communication, and the other output branched light as excitation light of optical fiber amplification means used for the first wavelength band of a second direction communication, and
   the second equal branching coupling means outputs one output branched light as excitation light used in optical fiber amplification means used for the second wavelength band of the first direction communication, and the other output branched light as excitation light of optical fiber amplification means used for the second wavelength band of the second direction communication.

3. The optical communication device according to claim 1 or 2, comprising:

   four of the excitation means and two power supplies, wherein first and second excitation means of the excitation means are driven by a first power supply, and third and fourth excitation means are driven by a second power supply; and
   polarization multiplexing means for polarization-multiplexing two third excitation lights output from the third and fourth excitation means and inputting the polarization-multiplexed light to the unequal branching means.

4. The optical communication device according to any one of claims 1 to 3, wherein the unequal branching means includes unequal branching coupling means.

5. The optical communication device according to any one of claims 1 to 3, wherein the unequal branching means includes one equal branching coupling means and one optical attenuation means.

6. The optical communication device according to any one of claims 1 to 5, comprising
   at least one optical amplification unit including a plurality of optical fiber amplification means associated with the plurality of wavelength bands, respectively,
   the optical amplification unit comprising

demultiplexing means for demultiplexing an input optical signal into optical signals of the plurality of wavelength bands,

wavelength multiplexing/demultiplexing means for multiplexing excitation light for optical fiber amplification means associated with each of the plurality of wavelength bands with the optical signal, and

multiplexing means for multiplexing a plurality of optical signals amplified by the plurality of optical fiber amplification means, respectively, and generating an output optical signal.

7. The optical communication device according to any one of claims 1 to 6, wherein the plurality of wavelength bands are a C-band and an L-band.

8. An optical repeater comprising the optical communication device according to any one of claims 1 to 7.

9. An excitation light supply device that supplies respective excitation lights to optical fiber amplification means associated with a plurality of wavelength bands, respectively, the device comprising:

three or more excitation means each for outputting excitation light;
equal branching means having an equal branching ratio;
first and second equal branching coupling means having an equal branching ratio of two inputs/two outputs; and
unequal branching means having a predetermined unequal branching ratio, wherein
the equal branching means inputs a first excitation light and a second excitation light and generates a plurality of equally branched lights, and the unequal branching means inputs at least one third excitation light and generates a plurality of unequally branched lights,
the first equal branching coupling means inputs one of the equally branched lights and a first unequally branched light, and outputs output branched light of the first equal branching coupling means as excitation light of optical fiber amplification means used for a first wavelength band, and
the second equal branching coupling means inputs one of the equally branched lights and a second unequally branched light, and outputs output branched light of the second equal branching coupling means as excitation light of optical fiber amplification means used for a second wavelength band.

10. The excitation light supply device according to claim 9, wherein
the equal branching means includes top equal branching coupling means having an equal branching ratio of two inputs/two outputs, the first equal branching coupling means, and the second equal branching coupling means,
the top equal branching coupling means inputs the first excitation light and the second excitation light, and outputs a first branched light and a second branched light,
the unequal branching means inputs the at least one third excitation light, and outputs a third branched light and a fourth branched light,
the first equal branching coupling means inputs the first branched light and the third branched light, and outputs excitation light of optical fiber amplification means used for the first wavelength band, and
the second equal branching coupling means inputs the second branched light and the fourth branched light, and outputs excitation light of optical fiber amplification means used for the second wavelength band.

11. The excitation light supply device according to claim 9 or 10, wherein

the first equal branching coupling means outputs one output branched light of the first equal branching coupling means as excitation light used in optical fiber amplification means used for the first wavelength band of a first direction communication, and the other output branched light of the first equal branching coupling means as excitation light of optical fiber amplification means used for the first wavelength band of a second direction communication, and
the second equal branching coupling means outputs one output branched light of the second equal branching coupling means as excitation light used in optical fiber amplification means used for the second wavelength band of the first direction communication, and the other output branched light of the second equal branching coupling means as excitation light of optical fiber amplification means used for the second wavelength band of the second direction communication.

12. The excitation light supply device according to any one of claims 9 to 11, comprising:

four excitation means and two power supplies, wherein first and second excitation means of the excitation means are driven by a first power supply, and third and fourth excitation means are driven by a second power supply; and
polarization multiplexing means for polarization-multiplexing two third excitation lights from the third and fourth excitation means and inputting the polarization-multiplexed light to the unequal branching means.

**13.** The excitation light supply device according to any one of claims 9 to 12, wherein the unequal branching means includes unequal branching coupling means.

**14.** The excitation light supply device according to any one of claims 9 to 12, wherein the unequal branching means includes one equal branching coupling means and one optical attenuation means.

**15.** The excitation light supply device according to claim 9, wherein
the equal branching means includes equal branching coupling means having an equal branching ratio of two inputs/two outputs,
the equal branching coupling means inputs the first excitation light and the second excitation light, and outputs a first branched light and a second branched light,
the unequal branching means inputs the at least one third excitation light, and outputs a third branched light and a fourth branched light,
the first equal branching coupling means inputs the first branched light and the third branched light, and outputs excitation light of optical fiber amplification means used for the first wavelength band, and
the second equal branching coupling means inputs the second branched light and the fourth branched light, and outputs excitation light of optical fiber amplification means used for the second wavelength band.

**16.** An excitation light supply method comprising:

outputting a first excitation light to a third excitation light;
first equal branching coupler coupling means and second equal branching coupler coupling means having an equal branching ratio of two inputs/two outputs;
coupling the first excitation light and the second excitation light, branching the coupled light at an equal branching ratio, and generating a plurality of equally branched lights;
branching the third excitation light at a predetermined unequal branching ratio, and generating a plurality of unequally branched lights;
coupling one of the plurality of equally branched lights and one of the plurality of unequally branched lights, branching the coupled light at an equal branching ratio, and outputting the branched light as excitation light of optical fiber amplification means used for a first wavelength band; and
coupling the other one of the plurality of equally branched lights and the other one of the plurality of unequally branched lights, branching the coupled light at an equal branching ratio, and outputting the branched light as excitation light of optical fiber amplification means used for a second wavelength band.

FIG. 1

FIRST EXAMPLE EMBODIMENT

FIG. 2

SECOND EXAMPLE EMBODIMENT

FIG. 3

THIRD EXAMPLE EMBODIMENT

UPSTREAM LINE

DMUX 120

WDM 110

EDF 100
C-band

WDM 111

EDF 101
L-band

MUX 121

CPL302

CPL301

P1

P2

Padd1

Padd2

LD1

LD2

LD3

LD4

POWER SUPPLY

504

ATT 403

CPL304

CPL303

EDF 200
C-band

WDM 210

EDF 201
L-band

WDM 211

DMUX 220

MUX 221

DOWNSTREAM LINE

## INTERNATIONAL SEARCH REPORT

| International application No. |
| --- |
| PCT/JP2017/041586 |

A. CLASSIFICATION OF SUBJECT MATTER
Int.Cl. H01S3/10(2006.01)i, H01S3/067(2006.01)i, H04B10/294(2013.01)i

According to International Patent Classification (IPC) or to both national classification and IPC

B. FIELDS SEARCHED

Minimum documentation searched (classification system followed by classification symbols)
Int.Cl. H01S3/10-H01S3/067

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2006-12979 A (HITACHI CABLE) 12 January 2006, entire text, all drawings (Family: none) | 1-16 |
| A | JP 2004-343121 A (SAMSUNG ELECTRONICS CO., LTD.) 02 December 2004, entire text, all drawings & US 2004/0240045 A1 & KR 10-2004-0099026 A | 1-16 |

☒ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 January 2018 | 06 February 2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2017/041586

C (Continuation).   DOCUMENTS CONSIDERED TO BE RELEVANT

| Category* | Citation of document, with indication, where appropriate, of the relevant passages | Relevant to claim No. |
|---|---|---|
| A | JP 8-304860 A (KOKUSAI DENSHIN DENWA CO., LTD.) 22 November 1996, entire text, all drawings (Family: none) | 1-16 |
| A | WO 2006/085370 A1 (FUJITSU LIMITED) 17 August 2006, entire text, all drawings & US 2007/0268569 A1 | 1-16 |
| A | US 2002/0167722 A1 (WILLNER, A. E. et al.) 14 November 2002, entire text, all drawings & WO 2001/080379 A1 & AU 5346501 A | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6049417 A
- JP 2006012979 A
- JP H8304860 B
- JP 2014072280 A
- JP 2002319726 A
- JP 2016229936 A